(19) Europäisches Patentamt
European Patent Office
Office européen des brevets

(11) Numéro de publication : **0 317 449 B1**

(12) **FASCICULE DE BREVET EUROPEEN**

(45) Date de publication du fascicule du brevet :
**24.07.91 Bulletin 91/30**

(51) Int. Cl.$^5$ : **A23N 1/00**

(21) Numéro de dépôt : **88420378.7**

(22) Date de dépôt : **09.11.88**

(54) **Machine automatique pour le pressage des agrumes.**

(30) Priorité : **13.11.87 FR 8715961**

(43) Date de publication de la demande :
**24.05.89 Bulletin 89/21**

(45) Mention de la délivrance du brevet :
**24.07.91 Bulletin 91/30**

(84) Etats contractants désignés :
**AT BE CH DE ES FR GB GR IT LI LU NL SE**

(56) Documents cités :
**WO-A-84/02830**
**US-A- 2 311 565**
**US-A- 2 629 317**
**US-A- 2 723 618**
**US-A- 3 272 116**

(73) Titulaire : **SANTOS S.A.**
**140-150 Avenue Roger Salengro**
**F-69120 Vaulx en Velin (FR)**

(72) Inventeur : **Bertrand, Michel**
**La Lombardière**
**F-38200 Luzinay (FR)**

(74) Mandataire : **Monnier, Guy et al**
**Cabinet Monnier 150 Cours Lafayette B.P. 3058**
**F-69393 Lyon Cédex 03 (FR)**

## Description

La présente invention a trait au pressage des citrons, oranges et autres agrumes en vue de l'obtention de jus propres à être consommés comme boissons.

On connaît des machines à fonctionnement automatique comprenant en combinaison une trémie supérieure pour le stockage et l'amenée des agrumes à presser, un mécanisme de sectionnement apte à couper chaque fruit en deux moitiés, deux dispositifs de pressage agencés pour traiter séparément ces deux moitiés afin d'en exprimer le jus, et un mécanisme de transfert agencé pour amener les moitiés auxdits dispositifs et évacuer les peaux à la sortie de ceux-ci. Les Brevets U.S.A. 3 272 116 (WHITE), 2 629 317 (NELSON) et 2 311 565 (NELSON) illustrent bien la technique connue en la matière.

Chaque dispositif de pressage comprend généralement un corps fixe en forme d'ogive qui est associé d'une part à un presseur animé d'un mouvement alternatif orienté axialement par rapport audit corps, d'autre part à un éjecteur escamotable destiné à dégager automatiquement la peau pressée. Cet éjecteur est le plus souvent formé par deux parois horizontales échancrées qui entourent l'ogive pour former appui pour la moitié de fruit à presser et qui sont guidées obliquement de manière à s'abaisser en s'écartant l'une de l'autre sous l'effet de la pression exercée sur la moitié d'agrume par le presseur mobile, puis à remonter sous l'action de moyens élastiques en éjectant la peau lorsque ce presseur remonte lui-même.

L'expérience démontre qu'un tel agencement ne donne pas entière satisfaction en pratique. Sa complexité de construction accroît le prix de revient du dispositif de pressage, en même temps qu'elle nuit à la fiabilité du fonctionnement automatique de celui-ci et gêne son nettoyage après utilisation.

C'est à ces inconvénients qu'entend principalement remédier la présente invention, laquelle a pour objet le dispositif de pressage défini à la revendication 1.

En fait l'invention consiste essentiellement à constituer l'éjecteur sous la forme d'une grille à profil circulaire dont les bras radiaux coulissent verticalement dans des fentes longitudinales du corps fixe en forme d'ogive, les moyens élastiques, disposés entre ladite grille et la base du corps ou ogive, étant avantageusement constitués par un ressort hélicoïdal interposé entre les bras de la grille et des équerres solidaires de la base du corps.

Le dessin annexé, donné à titre d'exemple, permettra de mieux comprendre l'invention, les caractéristiques qu'elle présente et les avantages qu'elle est susceptible de procurer :

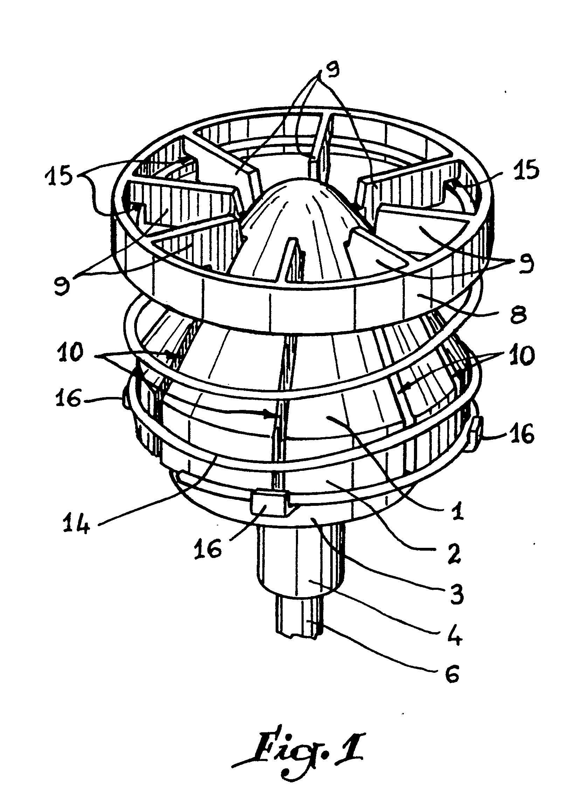

Fig. 1 est une vue en perspective illustrant l'agencement général d'un dispositif de pressage établi suivant l'invention.

Fig. 2 en est une coupe axiale, l'éjecteur étant représenté en position basse en fin de pressage.

Fig. 3 reproduit fig. 2 avec l'éjecteur en position haute.

Sur ce dessin la référence 1 désigne le corps fixe en forme d'ogive du dispositif de pressage. Ce corps 1, prévu creux, comporte une embase 2 de forme cylindrique qui se raccorde par un plateau démontable 3 à un moyeu axial 4, propre à être fixé, par exemple à l'aide d'une vis-pointeau telle que 5, à un support vertical 6, lequel traverse un collecteur fixe 7. On observera que la face supérieure du plateau 3 est profilée obliquement en 7 pour permettre l'écoulement du jus, celui-ci étant finalement recueilli par le collecteur 7 qui le guide vers un versoir (non représenté).

Le dispositif de pressage comprend également un éjecteur constitué par une grille 8 à profil circulaire dont le diamètre est légèrement supérieur à celui de l'embase cylindrique 2 du corps 1. La partie annulaire de cette grille 8 comporte des bras radiaux 9 engagés à coulissement dans des fentes longitudinales 10 pratiquées dans le corps 1. On remarquera que les bras 9 sont réunis dans la partie centrale de la grille 8 pour former une bague axiale 11 qui est guidée à l'intérieur d'un moyeu 12 défini par le bord vertical d'entretoises internes 13 du corps 1.

L'éjecteur ou grille 8 est relié au corps fixe 1 par un ressort hélicoïdal 14 dont la spire supérieure prend appui dans des encoches 15 ménagées dans les bras 9 tandis que la spire inférieure est appliquée contre des petites équerres 16 rapportées, par exemple par soudure, contre le bord inférieur de l'embase cylindrique 2 du corps 1.

A la façon usuelle, le dispositif de pressage est complété par un presseur 17 en forme d'entonnoir ouvert en direction du bas, propre à coiffer le corps ou ogive 1. Ce presseur 17 est fixé, par exemple par une vis 18, à l'extrémité inférieure d'une tige 19 animée d'un mouvement vertical alternatif.

Le fonctionnement du dispositif de pressage susdécrit découle des explications qui précédent et se comprend aisément de ce fait.

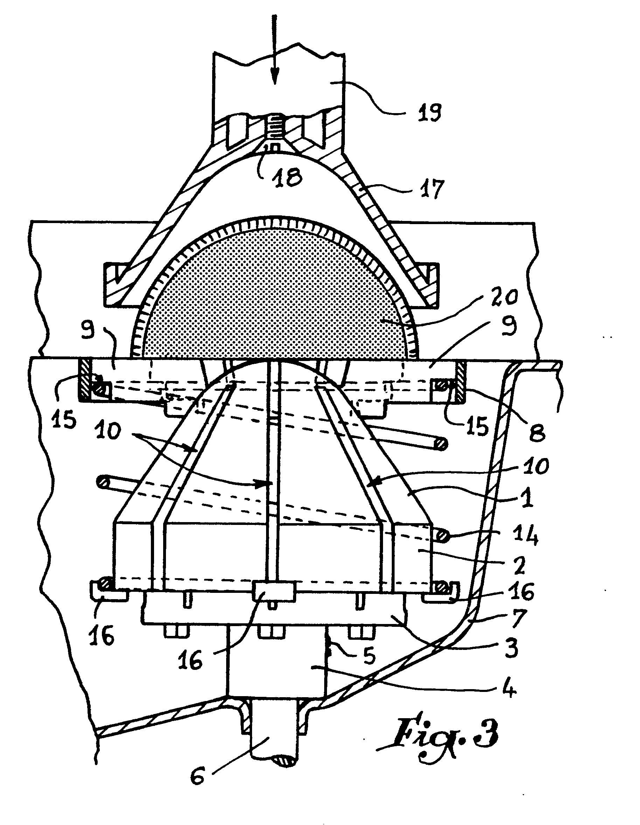

Lorsque le presseur 17 est à sa position la plus haute pour laquelle il dégage complètement l'espace situé au-dessus du dispositif, une moitié de fruit 20 peut être posée sur la grille 8 elle-même en position haute. Quand le presseur 17 s'abaisse à la manière illustrée en fig. 3, il prend appui contre la moitié 20 qu'il repousse vers le bas, si bien que la grille 8 est elle-même déplacée dans le même sens à l'encontre du ressort 14 moyennant coulissement des bras 9 dans les fentes 10. Par suite de la pénétration du corps 1 dans la moitié 20, celle-ci est pressée, le jus s'écoulant le long du corps 1 et à travers les fentes 10.

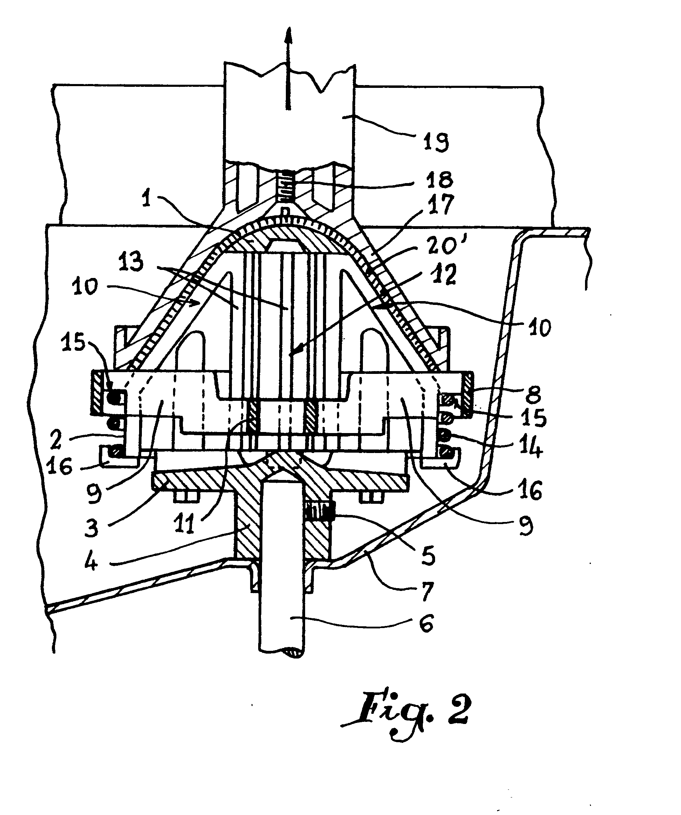

Fig. 2 illustre la fin de l'opération de pressage. On conçoit que lorsque le presseur 17 va remonter, la grille ou éjecteur 8 se déplace vers le haut sous l'effet du ressort 14, en chassant la peau 20′ du fruit hors du corps 1. En position haute, cette peau 20' peut être évacuée latéralement.

La construction du dispositif est simple et parfaitement fiable.

## Revendications

1. Dispositif pour le pressage mécanique des agrumes, du genre comprenant un corps fixe (1) en forme d'ogive, un presseur (17) animé d'un mouvement alternatif orienté axialement par rapport audit corps, et un éjecteur escamotable (8, 9, 11) associé à des moyens élastiques (14) qui lui permettent de s'éclipser sous l'effet de la pression exercée par le presseur (17) précité sur la moitié d'agrume à traiter (20) et qui assurent son rappel et l'éjection de la peau (20') lors du retour de ce presseur (17), caractérisé en ce que l'éjecteur (8, 9, 11) est constitué par une grille circulaire (8) dont les bras radiaux (9) sont engagés dans des fentes (10) pratiquées longitudinalement dans le corps en ogive (1), tandis que les moyens élastiques de rappel (14) sont disposés entre ladite grille (8) et l'embase (2) de ce corps.

2. Dispositif suivant la revendication 1, caractérisé en ce que les moyens élastiques (14) de rappel sont constitués par un ressort hélicoïdal dont les spires d'extrémités prennent respectivement appui contre les bras radiaux (9) et contre des équerres (16) solidaires de l'embase (2).

## Patentansprüche

1. Mechanische Zitruspresse mit einem festen, spitzbogenartig zulaufenden Körper (1), mit einem Preßstück (17), welches mit Bezug auf den Körper axial hin- und herbewegt werden kann, und mit einem versenkbaren Auswerfer (8, 9, 11), der einer elastischen Rückholeinrichtung (14) zugeordnet ist, die es diesem ermöglicht, sich unter der Wirkung des von dem Druckstück (17) auf die zu behandelnde Hälfte der Zitrusfrucht (20) ausgeübten Druckes zu versenken, und die Rückführung des Auswerfers und das Auswerfen der Haut (20') bei der Rückkehr des Preßstückes (17) sicherstellt, dadurch gekennzeichnet, daß der Auswerfer (8, 9, 11) aus einem kreisförmigen Gitter (8) besteht, dessen radiale Arme (9) in Schlitzen (10) in Längsrichtung des spitzbogenförmigen Körpers (1) geführt sind, während die elastische Rückholeinrichtung (14) zwischen dem Gitter (8) und dem Sockel (2) des Körpers angeordnet ist.

2. Vorrichtung nach Anspruch 1, dadurch gekennzeichnet, daß die elastische Rückholeinrichtung (14) durch eine Schraubenfeder gebildet wird, deren äußere Windungen sich an den radialen Armen (9) bzw. an Winkelleisten (16) abstützen, die an dem Sockel (2) befestigt sind.

## Claims

1. Device for mechanically squeezing citrus fruits, of the type comprising a fixed body (1) in the form of an ogive, a squeezer (17) animated by a reciprocating movement oriented axially with respect to said body, and a retractable ejector (8, 9, 11) associated with elastic means (14) which enable it to retract under the effect of the pressure exerted by the above-mentioned squeezer (17) on the citrus fruit half (20) to be treated and which ensure its return and the ejection of the skin (20') upon the return of this squeezer (17), characterized in that the ejector (8, 9, 11) is constituted by a circular grid (8) of which the radial arms (9) are engaged in slots (10) made longitudinally in the ogival body (1), whilst the elastic return means (14) are disposed between said grid (8) and the base (2) of this body.

2. Device according to Claim 1, characterized in that the elastic return means (14) are constituted by a helical spring of which the end turns abut respectively against the radial arms (9) and against angles (16) fast with the base (2).

*Fig. 1*

Fig. 2

*Fig. 3*